# EUROPÄISCHE PATENTSCHRIFT

(11) **EP 0 832 587 B1**
(45) Veröffentlichungstag und Bekanntmachung des Hinweises auf die Patenterteilung: **01.12.2004**
(21) Anmeldenummer: 97115146.9
(22) Anmeldetag: 02.09.1997
(51) Int. Cl.: A47G 1/17

(54) **Wiederlösbare, selbstklebende Vorrichtung**
Removable adhesive device
Dispositif adhésif amovible

(30) Priorität: 13.09.1996 DE 19637223
(43) Veröffentlichungstag der Anmeldung: 01.04.1998
(73) Patentinhaber: tesa AG, 20253 Hamburg (DE)
(72) Erfinder: Lühmann, Bernd, Dr., 22844 Norderstedt (DE); Junghans, Andreas, 22457 Hamburg (DE); Raadts, Thomas, 58370 Fröndenberg (DE)

(56) Entgegenhaltungen:
- WO-A-92/11333
- WO-A-94/21157

## Beschreibung

Die Erfindung betrifft eine wiederablösbare, selbstklebende Vorrichtung, die rückstandsfrei durch Ziehen an der an ihr angeordneten Klebfolie in Richtung der Verklebungsebene aus ihrer Verklebung wieder gelöst werden kann. Insbesondere betrifft die Erfindung eine derartige Platte, an der ggf. weitere Dinge befestigt werden können.

Solche Vorrichtungen, insbesondere Haken sind bekannt. So beschreibt die **DE 42 33 872 C2** einen wiederablösbaren, selbstklebenden Haken, der mit einer auf Zug entklebenden Klebfolie ausgerüstet ist und der als "tesa® Power-Strips mit Haken" im Handel erhältlich ist. Auch ein sogenannter System-Haken mit Basisplatte und aufsteckbarem Dekorhaken ist als tesa® Power Strip System-Haken im Handel.

Auch aus WO 94/21157 ist ein solcher Haken bekannt, der sich vom vorgenannten insbesondere durch den Einsatz einer solchen Klebfolie unterscheidet, die hochdehnbar und zugleich nicht rückstellend ist.

Bei dem praktischen Einsatz derartiger Vorrichtungen können jedoch Probleme auftreten, insbesondere beim späteren Ablösen.

Nachteilig bei den bislang bekannten Problemlösungen ist insbesondere, daß das Lösen der Klebbindung durch Ziehen der Klebestreifen im wesentlichen in der Verklebungsebene geschehen muß, wobei Fehlanwendungen für den unerfahrenen Nutzer vorprogrammiert sind.

In vielen Fällen hat es sich gezeigt, daß die Ursache von Reißern darin besteht, daß der Anwender den zu lösenden Gegenstand während des Löseprozesses mit hohem Kraftaufwand gegen den verklebten Gegenstand drückt. Hierdurch wird die zum Herausziehen des Klebebandes aus der Klebfuge notwendige Kraft derart erhöht, daß die Reißfestigkeit überschritten wird, mit der unerfreulichen Konsequenz für den Anwender, daß das Klebeband reißt und die Verklebung nicht mehr rückstands- und zerstörungsfrei gelöst werden kann.

In der WO 92/11333 A1 ist in der Figur 3A ist ein Haken (52) mit einer Grundplatte (54) gezeigt, der auf einem Untergrund (66) mittels eines Klebestreifens (56) verklebt ist.
Die Grundplatte weist auf ihrer Rückseite eine Auskehlung auf, in der sich der Klebestreifen befindet.
Nach Art der Darstellung entspricht die Tiefe der Auskehlung exakt der Dicke des Klebestreifens. Wenn die Tiefe geringer wäre als die Dicke, würde die Grundplatte einen Abstand zum Untergrund aufweisen, quasi über dem Untergrund "schweben".

Aufgabe der Erfindung war es, die vorgenannten Nachteile zu überwinden.

Gelöst wird diese Aufgabe mittels einer Vorrichtung, wie sie in den Ansprüchen näher gekennzeichnet ist. Demgemäß betrifft die Erfindung:

Eine wiederablösbare, selbstklebende Vorrichtung mit einer Platte, an deren Seiten sich Rast-Vorrichtungen befinden, in die ein entsprechender Haken oder dergleichen eingerastet werden kann, und deren Rückseite einen Streifen einer beidseitig klebenden Klebfolie derart aufgeklebt aufweist, dass ein Ende der Klebfolie als Anfasser die Platte überragt, wobei die Klebfolie eine solche ist, dass die mit ihr erzielte Verklebung durch den Streifen streckendes Ziehen in Richtung der Verklebungsebene wieder lösbar ist, dadurch gekennzeichnet, dass die Rückseite der Platte (1) seitlich neben der aufgeklebten Klebfolie (5) Abstandshalter (3A, 3B) aufweist, deren Höhe geringer als die Dicke der Klebfolie (5) ist, wobei die Höhe der Abstandshalter (3A, 3B) 35 bis 90 % der Dicke der Klebfolie (5) beträgt.

Insbesondere eine Vorrichtung nach Anspruch 1, dadurch gekennzeichnet, daß sich die Abstandshalter (3A, 3B) zu beiden Seiten neben der aufgeklebten Klebfolie (5) befinden.

Insbesondere eine Vorrichtung nach Anspruch 1, dadurch gekennzeichnet, daß die Abstandshalter (3A, 3B) als Stege oder Segmente ausgebildet sind.

Insbesondere eine Vorrichtung nach Anspruch 1, dadurch gekennzeichnet, daß die Abstandshalter (3A, 3B), an beiden Seiten und an jeder dieser Seiten zumindest im Bereich der beiden Enden angeordnet sind.

Insbesondere eine Vorrichtung nach Anspruch 1, dadurch gekennzeichnet, daß sie als Spritzgußteil aus Kunststoff ausgebildet sind.

Insbesondere eine Vorrichtung nach Anspruch 1, dadurch gekennzeichnet, daß die Klebfolie (5) mit oder ohne Zwischenträger elastisch oder plastisch dehnbar ist.

Insbesondere eine Vorrichtung nach Anspruch 1, dadurch gekennzeichnet, daß die Adhäsion der Klebfolie (5) geringer als die Kohäsion ist, das Haftvermögen beim Dehnen der Folie weitgehend verschwindet, und das Verhältnis von Abzugskraft zu Reißlast mindestens 1 : 1,5 ist, wobei die Klebfolie eine solche auf Basis von thermoplastischem Kautschuk und klebrigmachenden Harzen ist, mit hoher Elastizität und geringer Plastizität.

Insbesondere eine Vorrichtung nach Anspruch 1, dadurch gekennzeichnet, daß die Rückseite der Klebfolie (5) mit einem Trennlaminat, wie einem silikonisierten Trennpapier oder einer Trennfolie, abgedeckt ist.

Die beanspruchte Höhe der Abstandshalter ist so gewählt, daß diese geringer ist als die Dicke der (unverstreckten) Klebstoff-Folie, so daß eine einwandfreie Verklebung mit dem Haftgrund möglich ist. Durch die beim Ablösevorgang auftretende Dehnung der Klebstoff-Folie verjüngt sich selbige in Breite und Dicke entsprechend. Ist die beim Ablösen erreichte Dicke der Klebstoff-Folie niedriger als die Höhe der Abstandshalter, so ist ein reißerfreies Ablösen der Klebstoff-Folie auch dann möglich, wenn gleichzeitig hohe Anpreßdrucke vertikal zur Verklebung auftreten, welche sonst zu einem Reißen des Klebebandes geführt hätten.

Erfindungsgemäß eignen sich als Klebstoff-Folien insbesondere solche entsprechend DE 33 31 016, DE 42 22 849, DE 42 33 872, WO 92/11333 und WO 94/21157.

So beschreibt DE 33 31 016 A1 eine Klebfolie für wiederlösbare Klebbindungen, die es gestattet, daß eine damit hergestellte Klebbindung durch Ziehen an der Klebfolie in Richtung der Verklebungsebene lösbar ist. Mit solchen Klebfolien lassen sich hohe Klebkräfte und Scherfestigkeiten erzielen und Klebverbunde ohne weitere Hilfsmittel wieder lösen, vergleichbar dem Öffnen eines Weckglases, ähnlich wie dort die Gummidichtung am Anfasser aus der Dichtungsfuge gezogen wird.

DE 42 22 849 C1 beschreibt eine derartige Klebfolie mit einem UV-undurchlässigen Anfasser.

Auch WO 92/11333 beschreibt unter anderem Klebfolien für entsprechende Anwendungen, wobei die eingesetzten Klebfolien eine geringe Elastizität bei gleichzeitig hoher Dehnung aufweisen.

Auch doppelseitige Selbstklebebänder mit Schaumstoff-Zwischenträger, z.B. aus Polyethylen-Schaum, lassen sich erfindungsgemäß einsetzen.

Generell sei zu Herstellung, Verarbeitung und Handhabung von den besonders bevorzugten Klebfolien auf DE 33 31 016, DE 42 22 849 und WO 92/11333 verwiesen.

Als Material für Platte bzw. Formkörper, insbesondere für Basisplatten eignen sich:

Kunststoff, Metall, Holz (beschichtet, z.B. lackiert und unbeschichtet), Keramik und dergleichen).

Erfindungsgemäße Vorrichtungen dienen zur einseitigen Aufnahme der Klebstoff-Folie, deren andere Seite auf den ausgewählten Untergrund verklebt wird. Auf die Vorrichtung bzw. Platte können unterschiedlichste Adapter plaziert werden, u.a. Hakenkörper. Zur Erzeugung einer hohen Verklebungsfestigkeit besteht die Plattenfläche auf der Seite, auf die die Klebstoff-Folie appliziert wird, insbesondere aus einem Material, welches eine für den jeweiligen Anwendungsfall ausreichende Adhäsion zur Klebstoff-Folie aufweist. Bei der Verwendung von Haftklebemassen auf Basis von Styrolblockcopolymeren oder Acrylatcopolymeren wird hierbei u.a. vorteilhafterweise Polystyrol, schlagzähmodifizierte Polystyrole, PMMA, aromatische Polyester, Polycarbonat oder Polyamid eingesetzt.

Zur Realisierung eines reißerfreien Abzugverhaltens auch bei Einwirkung hoher senkrecht zur Verklebungsebene einwirkender Kräfte (z.B. über hohen Anpreßdruck beim Lösen der Klebbindung) ist die Platte auf der Seite, die die Klebstoff-Folie trägt, mit Abstandshaltern (z.B. Stegen) ausgerüstet, wie dies noch im Detail beschrieben wird.

Abstandshalter können beidseitig neben der Klebstoff-Folie in gesamter Länge der Basisplatte, jedoch auch nur in bestimmten Teilbereichen hiervon vorhanden sein. Spezielle Ausformungen, rechtwinklig stegartig, abgerundet stegartig, punktförmig, etc. sind möglich.

Versuche mit unterschiedlichen wiederablösbaren Klebstoff-Folien zeigen, daß typische Stripdehnungen je nach Art und Aufbau der verwendeten Klebstoff-Folien zwischen ca. 100% und 800% liegen. In der Praxis zeigt sich im Falle von im wesentlichen kautschukelastischen Klebstoff-Folien, daß die Höhe der Distanzhalter mindestens ca. 0,05 mm, bevorzugterweise 0,10 mm höher sein sollte als die Dicke der verstreckten Klebstoff-Folien beim Ablöse-Prozeß. Für eine sichere Verklebung ist andererseits die Abstandshalter-Höhe ca. 0,05 mm, bevorzugterweise 0,1 mm, besonders bevorzugt 0,15 mm geringer zu halten als die Dicke der Klebstoff-Folien im nicht verstreckten Zustand. Die angegebenen Werte beziehen sich auf ebene, feste Haftgründe. Im Falle von rauhen und/oder leicht deformierbaren Haftgründen können sowohl für einen einwandfreien Verklebungsprozeß (ausreichender Anpreßdruck), als auch für ein einwandfreies Wiederablösen höhere als die genannten Werte sinnvoll sein.

Im folgenden soll die Erfindung anhand von Ausführungsbeispielen erläutert werden, ohne sie aber unnötig einschränken zu wollen. Es zeigen:
- Fig. 1: eine schräg-seitliche Ansicht einer erfindunsgemäßen Vorrichtung,
- Fig. 2: eine Seitenansicht gemäß Fig. 1, mit aufgeklebtem Klebfolien-Streifen,
- Fig. 3: eine Stirnansicht gemäß Fig. 1,
- Fig. 4: eine Seitenansicht gemäß Fig. 2, wobei die Vorrichtung mit ihrem Klebfolien-Streifen an einen Gegenstand angeklebt ist, und
- Fig. 5: eine Stirnansicht gem. Fig. 4.

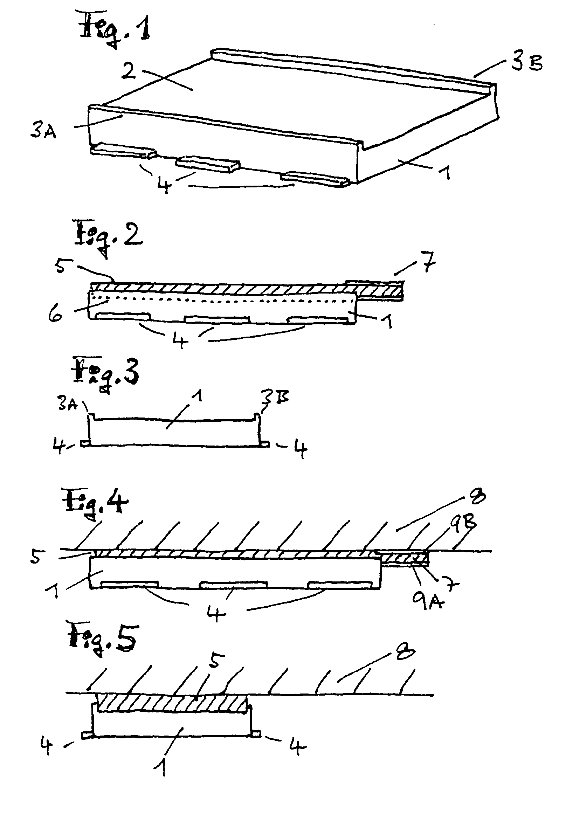

Im einzelnen zeigt Fig. 1 eine Platte 1 mit einer zum Aufnehmen eines Streifens einer beidseits klebenden Klebfolie dienenden Rückseite 2, welche seitlich von der aufzuklebenden Klebfolie Abstandshalter 3A, 3B in Form von Stegen aufweist. An ihren Seiten weist die Platte 1 zudem Rast-Vorrichtungen 4 auf, in die eine entsprechende Vorrichtung eingerastet werden kann, etwa eine Platte mit einem Haken oder einer anderen Befestigungsvorrichtung, wie dies Standard und im Handel erhältlich ist.

Fig. 2 zeigt, wie auf die Platte 1 ein Streifen 5 einer Klebfolie aufgeklebt ist, wobei mit der punktierten Linie 6 angedeutet ist, wie die Abstandshalter 3A bzw. 3B den Streifen 5 seitlich teilweise einfassen, während ein Ende der Klebfolie als Anfasser 7 die Platte 1 überragt. In Fig. 3 ist als Stirnansicht der Platte 1 diese mit den Abstandshaltern 3A, 3B dargestellt, sowie mit den Rast-Vorrichtungen 4.

Fig. 4 zeigt in seitlicher Ansicht, wie eine solche Vorrichtung an einen Gegenstand 8, etwa eine Wand, eine Tür oder einen Schrank angeklebt ist, mit Platte 1, Streifen 5 einer Klebfolie, wobei der Anfasser 7 ein Ende der Platte 1 überragt, wobei der Anfasser 7 mit dünnen Folien 9A, 9B nicht-klebend ausgerüstet ist. In Fig. 5 ist diese Anordnung in Stirnansicht dargestellt, mit Platte 1, Streifen 5 einer Klebfolie, sowie Abstandshaltern 3A, 3B, die den Streifen 5 seitlich einfassen und sich etwa bis zur Hälfte der Dicke des Streifens 5 erstrecken.

### Beispiel

Für eine einschichtige Klebstoff-Folie nachfolgender Rezeptur:
- 50 Teile Foralyn 110 (Hercules), 50 Teile Vector 4211 (Exxon Chemical), 0,5 Teile Irganox 1010 (Ciba)
der Dicke 650 µm wird eine Höchstzugkraft von 52 N/cm entsprechend 8,0 MPa und eine Reißdehnung von 1300 % ermittelt.

20 mm x 50 mm messende rechteckige Stücke der Klebstoff-Folie werden derart mittig auf Basisplatten bestehend aus Stahl der Abmessungen 3 mm x 40 mm x 22 mm (Höhe x Länge x Breite) verklebt, daß die Basisplatten einseitig über deren ganze Länge mit der Klebstoff-Folie bedeckt sind und ein 10 mm langer Klebstoff-Folienstreifen über eine der kurzen Seiten der Basisplatte herausragt, welcher zum späteren Ablösen als Anfasser genutzt werden kann. Die Basisplatten sind auf der Seite, auf die die Klebstoff-Folien appliziert werden, an beiden Längskanten mit 0,5 mm breiten Abstandshaltern unterschiedlicher Höhe versehen. Mit Klebstoff-Folien ausgerüstete Basisplatten werden auf einen planaren Resopaluntergrund verklebt. Hierzu werden die mit den Klebstoff-Folien ausgerüsteten Basisplatten flächig auf den Resopaluntergrund appliziert und für 5 Sekunden mit 500 N angedrückt. Die so fixierten Prüfkörper werden zum Ablösen der Klebstoff-Folien in einem zweiten Arbeitsgang mit einer vertikal auf die Verklebungsebene einwirkenden Kraft von ebenfalls 500 N beaufschlagt, der Klebfolienstreifen anschließend in einem Winkel von < 10° gegenüber der Verklebungsebene aus der Klebfuge herausgezogen. Zum Vergleich werden die Versuche ohne vertikal auf die Verklebungsebene einwirkende Kraft durchgeführt. Die Stripgeschwindigkeit beträgt bei allen Versuchen ca. 1000 mm/min. Es ergeben sich nachfolgende Ergebnisse.

| Höhe der Abstandshalter | Vertikale Andruckkraft 500 N | ohne vertikale |
|---|---|---|
| Krafteinwirkung | | |
| kein Abstandshalter | Strip reißt | reißerfrei ablösbar |
| 0,3 mm | reißerfrei ablösbar | |
| Stripkraft* | 10 // 14 N/cm | reißerfrei ablösbar |
| 0,4 mm | reißerfrei ablösbar | |
| Stripkraft* | 9 // 15 N/cm | reißerfrei ablösbar |
| 0,5 mm | reißerfrei ablösbar | |
| Stripkraft* | 9 // 10 N/cm | reißerfrei ablösbar |
| 0,6 mm S | reißerfrei ablösbar | |
| tripkraft* | 9 // 10 N/cm | reißerfrei ablösbar |
| 0,7 mm | keine Verklebung möglich | keine Verklebung möglich |

| | | |
|---|---|---|
| * Mittelwert // maximaler Wert (der maximale Wert wird zum Ende des Stripvorganges erreicht). | | |

Unter den gewählten Versuchsbedingungen lassen sich bei Einwirkung hoher vertikaler auf die Basisplatte einwirkender Kräfte ausschließlich mit Distanzhalter versehene Basisplatten reißerfrei wieder ablösen.

## Patentansprüche

1. Eine wiederablösbare, selbstklebende Vorrichtung mit einer Platte (1), an deren Seiten sich Rast-Vorrichtungen (4) befinden, in die ein entsprechender Haken oder dergleichen eingerastet werden kann, und deren Rückseite (2) einen Streifen einer beidseitig klebenden Klebfolie (5) derart aufgeklebt aufweist, dass ein Ende der Klebfolie als Anfasser (7) die Platte (1) überragt, wobei die Klebfolie (5) eine solche ist, dass die mit ihr erzielte Verklebung durch den Streifen streckendes Ziehen in Richtung der Verklebungsebene wieder lösbar ist, **dadurch gekennzeichnet, dass** die Rückseite (2) der Platte (1) seitlich neben der aufgeklebten Klebfolie (5) Abstandshalter (3A, 3B) aufweist, deren Höhe geringer als die Dicke der Klebfolie (5) ist, wobei die Höhe der Abstandshalter (3A, 3B) 35 bis 90 % der Dicke der Klebfolie (5) beträgt.

2. Vorrichtung nach Anspruch 1, **dadurch gekennzeichnet, dass** sich die Abstandshalter (3A, 3B) zu beiden Seiten neben der aufgeklebten Klebfolie (5) befinden.

3. Vorrichtung nach Anspruch 1, **dadurch gekennzeichnet, dass** die Abstandshalter (3A, 3B) als Stege oder Segmente ausgebildet sind.

4. Vorrichtung nach Anspruch 1, **dadurch gekennzeichnet, dass** die Abstandshalter (3A, 3B), an beiden Seiten und an jeder dieser Seiten zumindest im Bereich der beiden Enden angeordnet sind.

5. Vorrichtung nach Anspruch 1, **dadurch gekennzeichnet, dass** sie als Spritzgussteil aus Kunststoff ausgebildet sind.

6. Vorrichtung nach Anspruch 1, **dadurch gekennzeichnet, dass** die Klebfolie (5) mit oder ohne Zwischenträger elastisch oder plastisch dehnbar ist.

7. Vorrichtung nach Anspruch 1, **dadurch gekennzeichnet, dass** die Adhäsion der Klebfolie (5) geringer als die Kohäsion ist, das Haftvermögen beim Dehnen der Folie weitgehend verschwindet, und das Verhältnis von Abzugskraft zu Reißlast mindestens 1 : 1,5 ist, wobei die Klebfolie eine solche auf Basis von thermoplastischem Kautschuk und klebrigmachenden Harzen ist, mit hoher Elastizität und geringer Plastizität.

8. Vorrichtung nach Anspruch 1, **dadurch gekennzeichnet, dass** die Rückseite der Klebfolie (5) mit einem Trennlaminat, wie einem silikonisierten Trennpapier oder einer Trennfolie, abgedeckt ist.

9. Vorrichtung nach Anspruch 1, **dadurch gekennzeichnet, dass** an einer der Stirnseiten an der Rückseite der Platte (1) neben der aufgeklebten Klebfolie (5) ein Abstandshalter angeordnet ist.

10. Verwendung einer Vorrichtung nach einem der Ansprüche 1 - 10, zum selbstklebenden Befestigen und leichten und rückstandsfreien Wiederablösen.

## Claims

1. Redetachable, self-adhesive device having a plate (1), at the sides of which there are engagement devices (4) into which a corresponding hook or the like can be engaged and the rear side (2) of which has a strip of an adhesive film (5) which is adhesive on both sides and is adhesively attached in such a way that one end of the adhesive film protrudes beyond the plate (1) as a grip (7), the adhesive film (5) being of such a kind that the adhesive bond achieved with it can be released again by pulling in the direction of the bonding plane, stretching the strip, **characterized in that** the rear side (2) of the plate (1) has laterally alongside the adhesively attached adhesive film (5) spacers (3A, 3B), the height of which is less than the thickness of the adhesive film (5), the height of the spacers (3A, 3B) being 35 to 90% of the thickness of the adhesive film (5).

2. Device according to Claim 1, **characterized in that** the spacers (3A, 3B) are located on both sides alongside the adhesively attached adhesive film (5).

3. Device according to Claim 1, **characterized in that** the spacers (3A, 3B) are formed as fillets or segments.

4. Device according to Claim 1, **characterized in that** the spacers (3A, 3B) are arranged on both sides and, on each of these sides, at least in the region of the two ends.

5. Device according to Claim 1, **characterized in that** it is formed as an injection-moulded part of plastic.

6. Device according to Claim 1, **characterized in that** the adhesive film (5), with or without an intermediate substrate, is elastically or plastically extensible.

7. Device according to Claim 1, **characterized in that** the adhesion of the adhesive film (5) is less than the cohesion, the adhesiveness is to a great extent dissipated when the film is extended, and the ratio of pulling-off force to tearing load is at least 1:1.5, the adhesive film being of the kind which is based on thermoplastic rubber and tackifying resins, with high elasticity and low plasticity.

8. Device according to Claim 1, **characterized in that** the rear side of the adhesive film (5) is covered with a release laminate, such as a siliconized release paper or a release film.

9. Device according to Claim 1, **characterized in that** a spacer is arranged at one of the end faces on the rear side of the plate (1) alongside the adhesively attached adhesive film (5).

10. Use of a device according to one of Claims 1 - 10, for self-adhesive fastening and easy, residue-free redetachment.

## Revendications

1. Dispositif autoadhésif redétachable comportant une plaque (1) sur les côtés de laquelle se trouvent des dispositifs d'encliquetage (4) dans lesquels un crochet approprié ou similaire peut s'encliqueter et dont la face arrière (2) présente une languette d'un film adhésif (5) collant sur les deux côtés collée de telle façon qu'une extrémité du film adhésif dépasse de la plaque (1) en tant que prise (7), le film adhésif (5) étant tel que le collage obtenu avec celui-ci soit redétachable par une traction allongeant la languette dans le sens du plan de collage, **caractérisé en ce que** la face arrière (2) de la plaque (1) présente latéralement à côté du film adhésif (5) collé dessus des espaceurs (3A, 3B) dont la hauteur est inférieure à l'épaisseur du film adhésif (5), la hauteur des espaceurs (3A, 3B) s'élevant à 35 jusqu'à 90% de l'épaisseur du film adhésif (5).

2. Dispositif selon la revendication 1, **caractérisé en ce que** les espaceurs (3A, 3B) se situent des deux côtés contre le film adhésif collé (5).

3. Dispositif selon la revendication 1, **caractérisé en ce que** les espaceurs (3A, 3B) sont conformés en tant que listeaux ou segments.

4. Dispositif selon la revendication 1, **caractérisé en ce que** les espaceurs (3A, 3B) sont disposés des deux côtés et à chacun de ces côtés au moins dans la zone des deux extrémités.

5. Dispositif selon la revendication 1, **caractérisé en ce qu'**il est conçu en tant que pièce en matière synthétique moulée par injection.

6. Dispositif selon la revendication 1, **caractérisé en ce que** le film adhésif (5) est extensible de façon élastique ou plastique avec ou sans support intermédiaire.

7. Dispositif selon la revendication 1, **caractérisé en ce que** l'adhérence du film adhésif (5) est inférieure à la cohésion, le pouvoir adhésif disparaît dans une large mesure lors de l'allongement du film, et le rapport de la force d'enlèvement à la charge de rupture est au moins de 1 : 1,5, le film adhésif étant à base de caoutchouc thermoplastique et de résines rendant collant, présentant une grande élasticité et une faible plasticité.

8. Dispositif selon la revendication 1, **caractérisé en ce que** la face arrière du film adhésif (5) est recouverte d'un stratifié de séparation tel qu'un papier de séparation siliconé ou un film de séparation.

9. Dispositif selon la revendication 1, **caractérisé en ce que** sur l'une des faces frontales sur la face arrière de la plaque (1) est disposé un espaceur contre le film adhésif (5) collé dessus.

10. Utilisation d'un dispositif selon l'une quelconque des revendications 1-10, destinée à une fixation autoadhésive et à un réenlèvement facile sans laisser de résidu.
